# EUROPEAN PATENT APPLICATION

(11) **EP 4 580 195 A1**
(43) Date of publication of application: **02.07.2025**
(21) Application number: 22966694.6
(22) Date of filing: 28.11.2022
(51) Int. Cl.: H04N 21/43

(54) **CONNECTION CONTROL METHOD**

(71) Applicant: Guangzhou Shizhen Information Technology Co., Ltd., Guangzhou, Guangdong 510663 (CN); Guangzhou Shiyuan Electronics Co., Ltd., Guangzhou, Guangdong 510530 (CN); Guangzhou Shirui Electronics Co., Ltd., Guangzhou, Guangdong 510663 (CN)
(72) Inventor: ZHANG, Jianyang, Guangzhou, Guangdong 510530 (CN)
(74) Representative: Grünecker Patent- und Rechtsanwälte PartG mbB
(86) International application number: PCT/CN2022/134669
(87) International publication number: WO 2024/113089

(57) **Abstract**

An embodiment of the present disclosure discloses a connection control method, which is applied to a wireless screen transmitter, the wireless screen transmitter includes an interface module, a processing module, a wireless communication module, and a power module. The method includes: receiving, by the processing module, screen transmission data of the terminal device through the interface module in a working state, and transmitting the screen transmission data to the display device for display through the wireless communication module; providing continuously, by the power module, power to the processing module and the wireless communication module for a preset first duration to maintain the working state of the processing module when the interface module is disconnected with the terminal device; and generating a connection stop command and transmitting the connection stop command to the display device through the wireless communication module, so that the display device stops displaying the screen data when the processing module determines that the interface module is disconnected with the terminal device. The mentioned-above connection control method is used to solve a technical problem in the related art that the display device displays screen contents of a terminal device for a long time when the connection between the wireless screen transmitter and the terminal device is disconnected under wireless screen transmission.

## Description

### TECHNICAL FIELD

The present disclosure relates to the field of wireless screen transmission technology, particularly to a connection control method.

### BACKGROUND

Wireless screen transmission may be understood as synchronizing current screen contents of terminal devices such as laptops or mobile phones to display devices through wireless networks (such as wireless local area networks), so that the display devices can display the screen contents of the terminal devices.

Wireless screen transmitters are commonly used devices for wireless screen transmission. After connecting to terminal devices through wired manners, wireless screen transmitters record the screen contents of terminal devices and transmit them to wirelessly connected display devices for display. In related technologies, in order to improve connection reliability between wireless screen transmitters and display devices, a heartbeat mechanism is adopted, which means that one device in the wireless screen transmitter and display device transmits heartbeat packets to the other device at certain intervals, and the other device determines that the wireless screen transmission process is normal based on the heartbeat packets received at intervals. If the other device does not receive a heartbeat packet within set time, it is determined that the wireless screen transmission has ended, and at this time, the display device stops displaying the screen content transmitted. In this way, when the connection between the wireless screen transmitter and the terminal device is disconnected, the display device needs to continue displaying the transmitted screen content and only turn off the screen content after a set period of time. This results in a longer duration for the display device to display the terminal device screen content when the connection between the wireless screen transmitter and the terminal device is disconnected, which affects the efficiency of wireless screen transmission.

### SUMMARY

According to an embodiment of the present disclosure, a connection control method is provided to solve a technical problem in the related art that the display device displays screen contents of a terminal device for a long time when the connection between the wireless screen transmitter and the terminal device is disconnected under wireless screen transmission.

According to a first aspect, an embodiment of the present disclosure provides a connection control method, which is applied to a wireless screen transmitter, the wireless screen transmitter includes an interface module, a processing module, a wireless communication module, and a power module. The wireless screen transmitter is connected with a terminal device through the interface module and establishes a wireless connection with a display device through the wireless communication module. The power module is configured to provide power to the processing module and the wireless communication module, the method includes:
receiving, by the processing module, screen transmission data transmitted by the terminal device through the interface module in a working state, and transmitting the screen transmission data to the display device for display through the wireless communication module, where the screen transmission data is generated based on real-time screen content of the terminal device;
providing continuously, by the power module, power to the processing module and the wireless communication module for a preset first duration to maintain the working state of the processing module when the interface module is disconnected with the terminal device, where the wireless communication module maintains the wireless connection with the display device in the working state; and
generating a connection stop command and transmitting the connection stop command to the display device through the wireless communication module, so that the display device stops displaying the screen data based on the connection stop command when the processing module determines that the interface module is disconnected with the terminal device.

In an embodiment of the present disclosure, the power module of the wireless screen transmitter provides power to the processing module and wireless communication module of the wireless screen transmitter. During wireless screen transmission, the processing module of the wireless screen transmitter is in working state and receives screen transmission data transmitted by the terminal device through the interface module of the wireless screen transmitter, and then, transmits the screen transmission data to the display device through the wireless communication module for display. When the interface module is disconnected with the terminal device, the power module continues to provide power to the processing module and the wireless communication module for a first duration to maintain the working state of the processing module. The processing module maintains wireless connection between the wireless communication module and the display device in working state. And during the continuous power supply process of the power module, the processing module generates a connection stop command and transmits it to the display device through the wireless communication module, so that the display device stops displaying the screen data transmitted by the wireless screen transmitter based on the connection stop command. Through the above technical solution, such a technical problem has been solved that the display device displays the screen content of the terminal device for a long time when the connection between the wireless screen transmitter and the terminal device is disconnected under wireless screen transmission in related technologies. By arranging a power module in the wireless screen transmitter, the wireless screen transmitter no longer relies on the power provided by the terminal device, thereby ensuring that the wireless screen transmitter continues to work when the connection between the wireless screen transmitter and the terminal device is disconnected, and maintaining the wireless connection between the wireless screen transmitter and the display device. On this basis, when the wireless screen transmitter detects a disconnection from the terminal device, it is possible to quickly generate a connection stop command and transmit it to the display device to stop the display device displaying the screen data, greatly reducing the duration for the display device to continue displaying the screen data. Moreover, the power module only provides power to the processing module during the first duration, which can also reduce the power consumption of the power module.

### BRIEF DESCRIPTION OF DRAWINGS

FIG. 1 is an architecture diagram of wireless screen transmission in related technologies.
FIG. 2 is a schematic diagram of a structure of a wireless screen transmitter in related technologies.
FIG. 3 is a schematic diagram of transmission of a heartbeat mechanism in the relevant technology.
FIG. 4 is a schematic diagram of a device architecture according to an embodiment of the present disclosure.
FIG. 5 is a schematic diagram of a structure of a wireless screen transmitter according to an embodiment of the present disclosure.
FIG. 6 is a flowchart of a connection control method according to an embodiment of the present disclosure.
FIG. 7 is a schematic diagram of a wireless screen transmission network architecture according to an embodiment of the present disclosure.
FIG. 8 is a flowchart of a connection control method according to an embodiment of the present disclosure.
FIG. 9 is a schematic diagram of a wireless screen transmission network architecture according to an embodiment of the present disclosure.
FIG. 10 is a flowchart of a connection control method according to an embodiment of the present disclosure.
FIG. 11 is a flowchart of a connection control method according to an embodiment of the present disclosure;
FIG. 12 is a flowchart of a connection control method according to an embodiment of the present disclosure.
FIG. 13 is a schematic diagram of a structure of a conference system according to an embodiment of the present disclosure.

### DESCRIPTION OF EMBODIMENTS

The present disclosure will be further described in detail with reference to the accompanying drawings and embodiments. It may be understood that the specific embodiments described here are used to explain the present disclosure, rather than to limit the present disclosure. Additionally, it should be noted that for ease of description, only a portion related to the present disclosure is shown in the accompanying drawings, not all of the structure.

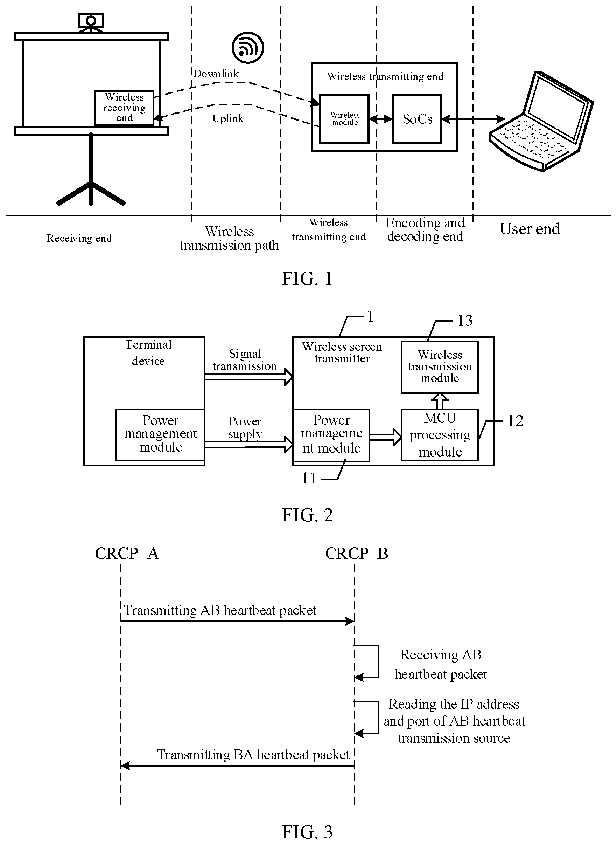

FIG. 1 shows an architecture diagram of wireless screen transmission in related technologies. Referring to FIG. 1, during wireless screen transmission, the transmitted data passes through a user end, encoding and decoding end, wireless transmitting end, wireless transmission path, and receiving end in sequence. The terminal device (taking the terminal device as a laptop in FIG. 1 as an example) may be used as the user end, and the content displayed on its screen is data transmitted to the screen. The wireless screen transmitter may serve as both an encoder decoder and a wireless transmitter. The encoder decoder is used to provide a wireless screen transmission protocol, which encodes the content displayed on the terminal device screen based on the wireless screen transmission protocol to acquire data that meets the wireless screen transmission standard. FIG. 1 describes by taking the decoding and encoding end as System on Chips (SoCs) as an example. The wireless transmitter is configured to transmit the encoded screen transmission data to the receiving end through a wireless transmission path. The display device may serve as a receiving end (taking the display device as an interactive board in FIG. 1 as an example), and the receiving end is a wireless receiving end configured to receive screen transmission data transmitted in the wireless transmission path and display the screen transmission data (i.e. display the screen content of the terminal device). In some cases, the wireless transmission path is a bidirectional transmission path, the wireless transmission path from the wireless transmitting end to the receiving end is an uplink wireless transmission path, and the wireless transmission path from the receiving end to the wireless transmitting end is a downlink wireless transmission path. Based on the architecture shown in FIG. 1, after the wireless screen transmitter is connected with the terminal device, the screen displayed on the terminal device is transmitted to the display device for display.

FIG. 2 is a schematic diagram of a structure of a wireless screen transmitter in related technology. Referring to FIG. 2, a wireless screen transmitter 1 includes a power management module 11, a processing module of microcontroller unit (MCU) 12, and a wireless transmission module 13. After the wireless screen transmitter is connected with the terminal device through a wired connection, the power management module of the terminal device uses a physical power line to supply power to the wireless screen transmitter. That is, after the terminal device is connected with the wireless screen transmitter through a wired connection, it not only transmits data related to screen transmission (i.e. signal transmission) but also provides power. At this time, the power management module of the terminal device and the power management module of the wireless screen transmitter cooperate with each other to enable the power management module of the wireless screen transmitter to supply power to the MCU processing module and the wireless transmission module based on the power provided by the terminal device. The MCU processing module may use chips integrated with MCU, and in some cases, the MCU processing module may further use SoCs. The wireless transmission module is configured to establish a wireless connection with the display device, usually by establishing transmission control protocol (TCP) connection. When the wireless screen transmitter is working, the MCU processing module transmits the screen display of the terminal device to the display device through the wireless transmission module. When the wireless screen transmitter is disconnected from the terminal device, the terminal device stops supplying power to the wireless screen transmitter, and at this time, the wireless screen transmitter stops working. It should be noted that in FIG. 2, the terminal device only shows the power management module. In fact, the terminal device further includes other components to ensure its normal operation.

Generally speaking, wireless screen transmitters work in the same local area network as display devices, and wireless connections within the local area network are unreliable. Unexpected disconnection of wireless connections may occur at any time due to power outages or network interruptions of the wireless screen transmitter. However, *TCP* connections are difficult to detect such unexpected disconnections. Based on this, a bidirectional heartbeat mechanism is adopted between wireless screen transmitters and display devices in related technologies. FIG. 3 is a schematic diagram of transmission of a heartbeat mechanism in the relevant technology. Referring to FIG. 3, in the wireless screen transmission scenario, one of CRCP_A and CRCP_B represents a wireless screen transmitter, and the other represents the display device. In FIG. 3, CRCP_A is used as a connecting party, and CRCP_B is used as the connected party for description. The regulation of the heartbeat mechanism is that the connection direction transmits a heartbeat packet to the connected party. After receiving the heartbeat packet, the connected party reads the IP address and communication port in the heartbeat packet to clarify the source IP address and communication port of the heartbeat packet. Then, based on the IP address and communication port in the heartbeat packet, the connected party transmits a heartbeat packet to the connecting party so that both the connecting party and the connected party may detect each other's heartbeat. Understandably, the heartbeat packet transmitted from CRCP_A to CRCP_B may be referred to as AB heartbeat packet, and the heartbeat packet transmitted from CRCP_B to CRCP_A may be referred to as BA heartbeat packet. Generally, the transmitting and reading of heartbeat packets between the connecting party and the connected party require the use of the same port. In addition, the heartbeat packets of the connecting party and the connected party are independent of each other and do not affect each other. In related technologies, when transmitting heartbeat packets, User Datagram Protocol (UDP) is used, and heartbeat packets are transmitted every 250ms (milliseconds). By default, if either the connecting party or the connected party does not receive a heartbeat packet within the set time, it is determined that the other party has disconnected from the wireless connection, and at this point, it is determined to finish the wireless screen transmission.

Under the heartbeat mechanism, when the network environment of the local area network where the wireless screen transmitter and display device are located is unstable or in weak network mode (also known as weak network environment), in order to maintain the continuous display of screen transmission data on the display device, that is, to avoid the display device being unable to display screen transmission data due to network fluctuations, the waiting time for the heartbeat packet is set to 15s (seconds). At this time, if one of the wireless screen transmitter and display device does not receive the heartbeat packet for 15s (seconds), it is determined that the other party disconnects the wireless connection and begins to close the wireless screen transmission. When the user subjectively turns off the wireless screen transmitter (such as disconnecting the wireless screen transmitter from the terminal device), the display device will also not receive heartbeat packets. Under this mechanism, the reason why the display device did not receive the heartbeat packet may be due to network factors or the wireless screen transmitter being subjectively turned off by the user. In this case, the display device cannot determine the reason for not receiving the heartbeat packet and may only disconnect the wireless connection and stop displaying the screen transmission data 15s (seconds) after not receiving the heartbeat packet. In this way, when the user actively disconnects the wireless screen transmitter from the terminal device, the display device will continue to display the screen transmission data for a long time, especially in work scenarios such as meetings, which seriously affects the user experience, meeting efficiency, and data security of the screen transmission data. For example, if the user has finished the meeting and left the conference room, the display device in the conference room will still display 15s (seconds) of screen transmission data, which may easily expose the content of the meeting.

Based on this, this embodiment of the present disclosure provides a connection control method to solve the technical problem in the related art that the continuous duration of displaying, by the display device, transmitted screen contents when the connection between the wireless screen transmitter and the terminal device is disconnected under wireless screen transmission. By adding a power module to the wireless screen transmitter, it is possible to continue to work even after the wireless screen transmitter disconnects from the terminal device to notify the display device to stop displaying screen data, thereby significantly reducing the duration of continuous display of screen data on the display device.

The connection control method according to an embodiment of the present disclosure may be executed by a connection control device. The connection control device may be implemented through software and/or hardware, and may be composed of two or more physical entities, or a single physical entity. In an embodiment, the connection control method is described using a wireless screen transmitter as an example of the connection control device.

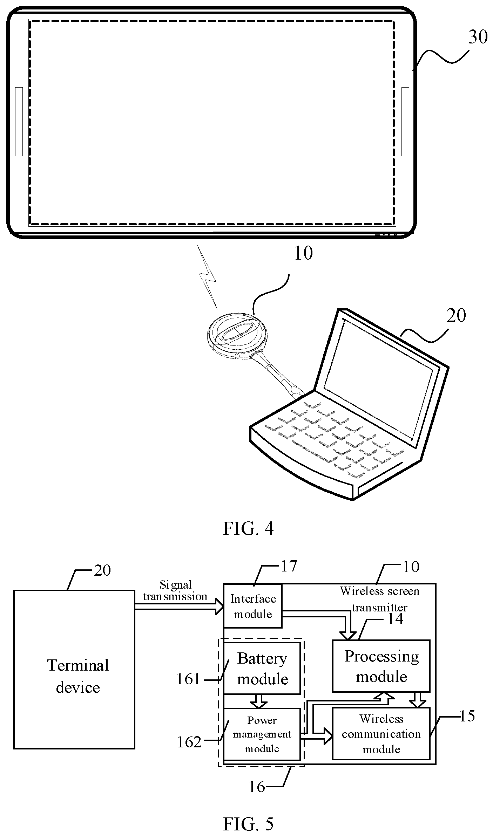

FIG. 4 is a schematic diagram of a device architecture according to an embodiment of the present disclosure, and FIG. 5 is a schematic diagram of a structure of a wireless screen transmitter according to an embodiment of the present disclosure. Referring to FIGS. 4-5, the wireless screen transmitter 10 includes an interface module 17, a processing module 14, a wireless communication module 15, and a power module 16. The wireless screen transmitter 10 is connected with the terminal device 20 through the interface module 17, and establishes a wireless connection with the display device 30 through the wireless communication module 15. The power module 16 is configured to provide power for the processing module 14 and the wireless communication module 15.

As an example, terminal device 20 may be held by users with screens such as personal computers (such as laptops, tablets), PADs, or mobile phones. The display device 30 may be an interactive board or smart TV with a screen configured display device. The specific types of terminal devices and display devices are not limited in this embodiment of the present disclosure. Generally, the screen size of the terminal device is smaller than that of the display device. As shown in FIG. 4, the wireless screen transmitter 10 operates between the terminal device 20 and the display device 30, and is configured to transmit the content (such as audio and video data, text data, etc.) displayed on the screen of the terminal device 20 to the display device 30 for more people to view and share. In an embodiment, the data transmitted by the wireless screen transmitter 10 to the display device 30 is referred to as screen transmission data. The screen transmission data is based on the actual content displayed on the terminal device screen. In some cases, the screen transmission data may be the entire display content on the terminal device screen, or the display content in some display windows or interfaces on the terminal device screen. Currently, taking screen transmission data as an example of all displayed content on the terminal device screen for description. The screen transmission data conforms to the wireless screen transmission protocol used by wireless screen transmitter 10. Currently, the wireless screen transmission protocol used by wireless screen transmitter 10 is not limited, and it may be a proprietary protocol of the wireless screen transmitter developer or a universal protocol.

Optionally, the screen transmission data may be encoded in the wireless screen transmitter 10. At this point, the wireless screen transmitter 10 obtains the content displayed on the screen of terminal device 20 and encodes it into screen transmission data based on the wireless screen transmission protocol. Optionally, the screen transmission data may be encoded in the terminal device 20, and in this case, the wireless screen transmitter 10 directly obtains the screen transmission data transmitted by the terminal device 20.

As an example, the wireless screen transmitter 10 includes an interface module 17, and the interface module provides specific one or more ports to achieve wired connection with the terminal device 20 through specific ports. The types of ports included in the interface module are not limited at present. For example, the ports included in the interface module 17 may be Universal Serial Bus (USB) ports or High Definition Multimedia Interface (HDMI) ports. In an embodiment, the wireless screen transmitter 10 and the terminal device 20 are connected via USB wired connection, taking the example of the interface module 17 containing a USB port. Optionally, when connected via USB cable, the interface module 17 is equipped with a USB port plug, and the terminal device 20 is equipped with a USB port socket. After the interface module 17 is inserted into the terminal device 20, the wireless screen transmitter 10 may work. However, the specific implementation manner for the wireless screen transmitter 10 and signal transmission with the wireless screen transmitter 10 is currently not limited. It may be understood that in practical applications, the interface module 17 of the wireless screen transmitter 10 may also be connected to the terminal device 20 through a connecting cable, the two ends of the connecting cable may be connected to the interface module 17 and the terminal device 20 respectively.

During operation, the wireless screen transmitter 10 establishes a wireless connection with the display device 30 in the same local area network. The implementation manner for the wireless screen transmitter 10 discovering the display device 30 and establishing a wireless connection with the display device 30 is currently not limited. For example, the wireless transmission protocol used for wireless connection between the wireless screen transmitter 10 and the display device 30 is ***TCP*** and ***socket*** communication is established to enable wireless screen transmitter 10 to transmit real-time screen transmission data to the display device 30. In an embodiment, after wireless connection between the wireless screen transmitter 10 and the display device 30, a bidirectional heartbeat mechanism is established. This heartbeat mechanism is the same as the heartbeat mechanism in related technologies, and is used to determine whether the wireless connection between the wireless screen transmitter 10 and the display device 30 is normal. That is, if the display device 30 does not receive the heartbeat packet transmitted by the wireless screen transmitter 10 within the set time, it determines that the wireless connection with the wireless screen transmitter 10 is disconnected.

As an example, the wireless screen transmitter 10 includes a power module 16, and the power module 16 is composed of a battery module 161 and a power management module 162. The battery module 161 includes a device that may provide power, for example, the battery module 161 includes a lithium battery or an alkaline battery. The specific structure and battery type embodiments are not limited. In the embodiments, the battery module 161 includes a rechargeable lithium battery for illustrative description. The power management module 162 is configured to implement power management work, which may manage the power provided by the battery module 161. For example, the power management module 162 provides suitable power to other modules inside the wireless screen transmitter 10 based on the power of the battery module 161, that is, to provide the working voltage required for the normal operation of the wireless screen transmitter. At this point, the wireless screen transmitter 10 may be considered as an active device. In this way, when the wireless screen transmitter 10 is disconnected from the terminal device 20, the wireless screen transmitter may still continue to work.

Optionally, after wired connection between the wireless screen transmitter 10 and the terminal device 20, the terminal device 20 provides power to the wireless screen transmitter 10. After disconnecting from terminal device 20, the wireless screen transmitter 10 uses its own internal power supply. And optionally, the wireless screen transmitter 10 uses its own internal power supply regardless of whether it is connected with the terminal device 20 or not. In the implementation example, the wireless screen transmitter 10 is described using its own internal power supply for power supply.

Optionally, a surface of the wireless screen transmitter 10 is further equipped with a physical button. After the user presses the physical button, the power module 16 of the wireless screen transmitter 10 starts to supply power to the wireless screen transmitter 10. And optionally, after inserting the wireless screen transmitter 10 into the terminal device 20, the power module 16 of the wireless screen transmitter 10 begins to supply power to the wireless screen transmitter 10. Also optionally, regardless of whether the wireless screen transmitter 10 is working or not, the power module 16 continuously supplies power to the wireless screen transmitter 10.

In an embodiment, the power module 16 always supplies power to the wireless screen transmitter 10 regardless of whether it is working. At this time, in order to save battery power consumption, the power module 16 may be set to supply power to different modules in the wireless screen transmitter 10 in different scenarios. For example, during the operation of the wireless screen transmitter 10, the power module 16 provides power to all modules in the wireless screen transmitter 10. When the wireless screen transmitter 10 is stationary, the power module 16 stops supplying power to the processing module 14 to save power consumption. The criteria for determining the working state and the stationary state may be set based on actual situations. For example, in a case of wired connection to the terminal device 20, the wireless screen transmitter 10 is determined to be working, and in a case of not wired connection to the terminal device 20, the wireless screen transmitter 10 is determined to be stationary.

Optionally, since the power module 16 continuously supplies power to the wireless screen transmitter 10, the battery module 161 may experience losses during the continuous power supply from the factory to the user usage of the wireless screen transmitter 10. In order to avoid this loss, a protection option for the battery module 161 may be set in the power management module 162. When the wireless screen transmitter 10 leaves the factory, the protection option in the power management module 162 is in the default enabled state. At this time, the power module 16 will not supply power to the wireless screen transmitter 10 to prevent the loss of the battery module 161 during transportation of the wireless screen transmitter 10. When the wireless screen transmitter 10 is first connected to the terminal device 20 by the user, the battery management module 162 turns off the protection option. At this time, the power module 16 continues to supply power to the wireless screen transmitter 10 normally.

In an embodiment, the charging manner of the battery module 161 may be set according to the actual situation. For example, after the wireless screen transmitter 10 is connected with the terminal device 20, the terminal device 20 charges the battery module 161 through a physical power cord, so that the battery module 161 is in a charged state after the wireless screen transmitter 10 is disconnected from the terminal device 20.

The wireless screen transmitter 10 further includes a processing module 14, the processing module 14 may include MCU or SoCs, etc. In an embodiment, the processing module 14 includes a storage part and a processing part. The storage part and the processing part may be integrated into one physical entity or may be separate physical entities. The storage part and the processing part may be understood as memory and processor, respectively. The components and circuit structures contained in the storage part and the processing part are not currently limited. The storage section may cache the currently processed data (such as screen transmission data) and also store the computer programs required during the operation of the wireless screen transmitter. The processing part includes one or more processors, and the processing part may run computer programs stored in the storage part to implement various functions of the wireless screen transmitter. On this basis, the data transmission between terminal device 20, the display device 30, and the wireless screen transmitter 10 requires the processing module 14. In addition, under the bidirectional heartbeat mechanism, the heartbeat packet transmitted by the wireless screen transmitter 10 is also generated by the processing module 14.

In an embodiment, the processing module 14 is connected with the power module 16, and specifically connected to the power management module 162 in the power module 16, to receive power provided by the power module 16.

The wireless screen transmitter 10 includes a wireless communication module 15, and the wireless communication module 15 is connected with the processing module 14 for transmitting data and instructions (i.e. transmission signals) to the display device 30 based on the instructions of the processing module 14. Optionally, the wireless communication module 15 may have both transmission and reception functions, or may only have transmission function, which the embodiments are not limited to. It may be understood that the wireless screen transmitter 10 and the display device 30 establish a wireless connection, specifically referring to the wireless communication module 12 establishing a wireless connection with the display device 30 based on the instructions of the processing module 11. The connection protocol used for the wireless connection is currently not limited. In an embodiment, the wireless communication module 15 may include a Wi-Fi module and/or a Bluetooth module, establish a wireless connection within the local area network with the display device 30 through the Wi-Fi module, and establish a Bluetooth connection with the display device 30 through the Bluetooth module. Optionally, the wireless communication module 15 further includes a Near Field Communication (NFC) module to achieve NFC functionality with the display device 30. For example, the wireless screen transmitter 10 obtains the communication address of the display device 30 in the local area network through the NFC module, and then establishes a wireless connection with the display device 30 through the Wi-Fi module based on the communication address.

The wireless communication module 15 is connected with the power module 16, and specifically connected to the power management module 162 in the power module 16, so as to receive power provided by the power module 16.

Optionally, the wireless communication module 15 may further include one or more sensors. Currently, the sensors included in the wireless communication module 15 are referred to as a first sensor. The first sensor may be a gyroscope or accelerometer, etc., and the first sensor is configured to detect whether the wireless screen transmitter 10 has moved. A parameter threshold may be pre-set. When the parameter detected by the first sensor exceeds the parameter threshold, it is determined that the wireless screen transmitter 10 has moved. It may be understood that when the user uses the wireless screen transmitter 10, the user needs to first establish a wired connection to the terminal device 20, and the connection process requires moving the wireless screen transmitter 10. At this time, based on the first sensor, it may be determined whether the wireless screen transmitter 10 has moved. In an embodiment, the power supply strategy of the power module 16 is determined by detecting whether the wireless screen transmitter 10 has moved through the first sensor. For example, when the wireless screen transmitter 10 is stationary, the power module 16 only provides power to the wireless communication module 15 to ensure the continuous operation of the first sensor. When the wireless screen transmitter 10 is detected to have moved through the first sensor, the wireless communication module 15 notifies the power module 16, and then the power module 16 resumes providing power to all modules inside the wireless screen transmitter 10 to ensure the normal operation of the wireless screen transmitter 10. Optionally, a low-power program may be installed in the wireless communication module 15 to drive the first sensor to continue working and obtain the parameters detected by the first sensor. Then, the parameters are compared with the parameter threshold to obtain a detection result of the first sensor. When the detection result shows that the wireless screen transmitter 10 has moved, the detection result is fed back to the power module 16. When the detection result shows that the wireless screen transmitter 10 has not moved, the detection result is not fed back to the power module 16. At this time, the power module 16 defaults to the wireless screen transmitter 10 being stationary. It should be noted that when the user disconnects the wired connection between the wireless sensor 10 and the terminal device 20, the wireless screen transmitter 10 may also move. At this time, the power module 16 may also determine that wireless screen transmitter 10 has moved based on the first sensor. Since the power module 16 has already provided power to all modules inside the wireless screen transmitter 10, the power module 16 may not respond to the current movement.

It should be noted that the arrows shown in FIG. 5 are not a limitation on the direction of signal transmission between modules, but are only used to illustrate a feasible direction of signal transmission between modules. For example, according to FIG. 5, the processing module 14 may transmit signals to the wireless communication module 15, but it is not limited to only transmitting signals from the processing module 14 to the wireless communication module 15. Considering the specific application of the wireless screen transmitter 10, the wireless communication module 15 may also transmit signals to the processing module 14.

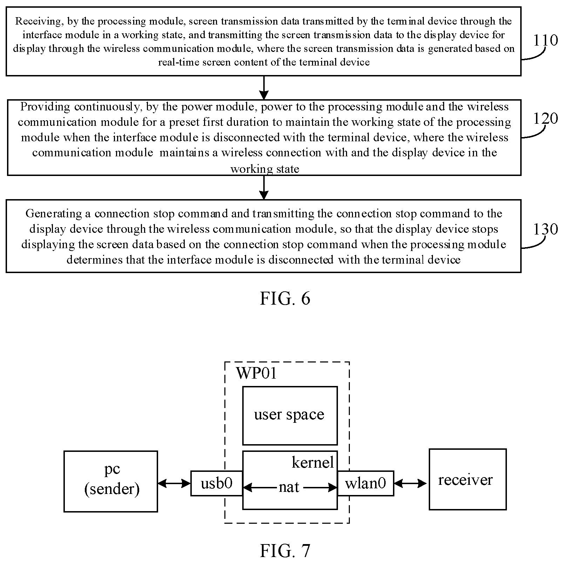

As an example, FIG. 6 is a flowchart of a connection control method according to an embodiment of the present disclosure. When the wireless screen transmitter executes the connection control method, it has already been connected to the terminal device and the display device. Referring to FIG. 6, the connection control method specifically includes:

Step 110: receiving, by the processing module, screen transmission data transmitted by the terminal device through the interface module in a working state, and transmitting the screen transmission data to the display device for display through the wireless communication module, where the screen transmission data is generated based on real-time screen content of the terminal device.

The processing module includes a working state and a non-working state. When the power module provides power to the processing module, the processing module is in a working state. When the power module does not provide power to the processing module, the processing module is in a non-working state (corresponding to the stationary state of the wireless screen transmitter). In the working state, the wireless screen transmitter and the display device continuously exchange heartbeat packets to maintain the wireless connection between the wireless screen transmitter and the display device through a bidirectional heartbeat mechanism. Currently, the wireless connection belongs to the application layer connection and is implemented through Wi-Fi. It should be noted that in practical applications, only the wireless screen transmitter may transmit heartbeat packets to the display device. In the embodiment, the example of the wireless screen transmitter and the display device exchanging heartbeat packets is described.

In the working state, the wireless screen transmitter may also receive screen transmission data from the terminal device and transmit it to display devices for display. For example, the interface module of the wireless screen transmitter receives screen transmission data transmitted by the terminal device and transmits the screen transmission data to the processing module. After receiving the screen transmission data, the processing module may transmit it to the wireless communication module. The wireless communication module transmits the screen transmission data to the display device for display. In this process, the processing module may transmit the screen data transparently or process the screen data first before transmitting it. For example, when the screen data transmitted by the terminal device conforms to the wireless screen transmission protocol, the processing module may directly transmit the screen data transparently. When the screen data transmitted by the terminal device does not conform to the wireless screen transmission protocol, the processing module encodes the screen data to comply with the wireless screen transmission protocol, and then transmits the encoded screen data to the wireless communication module.

Optionally, the display device stores the screen transmission data after receiving it. The stored screen transmission data may be the latest received screen transmission data, all screen transmission data received during this screen transmission process, or the latest received screen transmission data within the set duration or frame rate during this screen transmission process.

Step 120: providing continuously, by the power module, power to the processing module and the wireless communication module for a preset first duration to maintain the working state of the processing module when the interface module is disconnected with the terminal device, where the wireless communication module maintains a wireless connection with the display device in the working state.

When the screen content of the terminal device does not need to be transmitted and displayed on the display device, the user may disconnect the wired connection between the wireless screen transmitter and the terminal device to stop the signal transmission between the wireless screen transmitter and the terminal device. The users may disconnect the wireless screen transmitter from the terminal device by unplugging the wireless screen transmitter, or the users may disconnect the wireless screen transmitter from the terminal device by popping up a USB device. In an embodiment, the disconnection between the wireless screen transmitter and the terminal device is described by unplugging the wireless screen transmitter from the terminal device.

In an embodiment, the wireless screen transmitter continuously detects whether it is disconnected from the terminal device in the working state. Optionally, the detection process may be executed by the processing module of the wireless screen transmitter. The confirmation rule for disconnecting the wireless screen transmitter from the terminal device during detection is currently not limited. For example, compared with disconnecting, when a wireless screen transmitter is connected with a terminal device through an interface module, the voltage levels of some pins in the port of the interface module will change. Therefore, the processing module may determine whether the wireless screen transmitter is disconnected from the terminal device by detecting the changes in the voltage levels of the port pins. For example, in the process of wireless screen transmission, real-time data transmission is required between the terminal device and the wireless screen transmitter in order for the display device to display the real-time screen content of the terminal device. Therefore, the processing module may determine whether the wireless screen transmitter is disconnected from the terminal device by detecting whether there is real-time data transmission with the terminal device. For example, during the wireless screen transmission process, when the processing module detects that the physical entity button set by the wireless screen transmitter receives a press, it determines that the connection between the wireless screen transmitter and the terminal device has been disconnected. It should be noted that when the processing module detects whether the wireless screen transmitter is disconnected from the terminal device, it is specifically implemented by the processing module running its internally installed setting application. For example, when the processing module detects a disconnection between the wireless screen transmitter and the terminal device, the processing module notifies the power module.

When the power module determines that the connection between the wireless screen transmitter and the terminal device is disconnected, it supplies power based on a pre-set power disconnecting rule. The power disconnecting rule is used to specify how the power module provides power to the wireless screen transmitter when the connection between the wireless screen transmitter and the terminal device is disconnected. The power disconnecting rule may be set according to the actual situation.

In an embodiment, the power disconnecting rule is to continuously provide power to the processing module and the wireless communication module for a predetermined first duration when the connection between the wireless screen transmitter and the terminal device is disconnected. The first duration may be set according to the actual situation, for example, the first duration is 6s (seconds). Generally, within the first duration, the processing module may complete a processing logic after the connection is disconnected (i.e., complete step 130). When the power module determines that the connection between the wireless screen transmitter and the terminal device is disconnected, it continues to provide power to each module in the wireless screen transmitter (including the processing module and the wireless communication module), and times the duration of continuous power supply after the connection is disconnected. When the timing duration reaches the first duration, the power module only supplies power to the wireless communication module and no longer provides power to other modules such as the processing module.

In practical applications, the power disconnecting rule may also be applied to other situations. For example, the power disconnecting rule is when the first sensor detects that the wireless screen transmitter has been stationary for a third duration. The third duration may be set according to the actual situation, for example, the third duration is 6s (seconds). Generally, within the third duration, the processing module may complete the processing logic after disconnection (i.e., complete step 130). When the wireless screen transmitter is unplugged from the terminal device and the wireless screen transmitter is placed at a certain stationary position, the first sensor will not detect any movement of the wireless screen transmitter. Therefore, when the power module determines that the connection between the wireless screen transmitter and the terminal device is disconnected, it continues to provide power to each module in the wireless screen transmitter (including the processing module and the wireless communication module). Afterwards, the power module determines whether it has received the movement signal detected by the first sensor within the third duration (the movement signal indicates that the wireless screen transmitter has moved). If no movement signal is received, it means that the first sensor has stopped and has not been inserted into the new terminal device. Therefore, the power module only supplies power to the wireless communication module and no longer provides power to other modules such as the processing module. If a movement signal is received, it indicates that the first sensor has been disconnected from the terminal device and a new terminal device has been inserted. Therefore, the power module continues to provide power to each module in the working state of the wireless screen transmitter. It may be understood that during the process of the user unplugging the wireless screen transmitter from the terminal device and placing it in a stationary state, if the wireless screen transmitter moves, the first sensor will detect the movement and inform the power module. When the power module receives the disconnection notification from the processing module, it will also receive the movement notification from the first sensor. At this time, the power module continues to provide power to each module (including the processing module and the wireless communication module) in the wireless screen transmitter. When it no longer receives the movement notification from the first sensor, it starts timing. If it does not receive any movement notification from the first sensor within the third duration, it will only supply power to the wireless communication module and will not provide power to other modules such as the processing module.

In an embodiment, the power disconnecting rule is taken as the example of continuously providing power to the processing module and wireless communication module for a preset first duration when the connection between the wireless screen transmitter and the terminal device is disconnected. During the first duration of continuous power supply by the power module, the processing module remains in working state, and at this time, the processing module cannot receive the screen transmission data transmitted by the terminal device. However, the processing module still implements a bidirectional heartbeat mechanism with the display device, even if the wireless connection between the wireless communication module and the display device is maintained.

After the power module continues to supply power for the first duration, it only provides power to the wireless communication module and no longer provides power to the processing module. When the processing module no longer receives power, it enters a non-working state. After the processing module enters a non-working state and stops working, that is, the bidirectional heartbeat mechanism is no longer implemented. At this time, the wireless connection between the wireless communication module and the display device is terminated. Based on this, the connection control method in the embodiment further includes: the processing module transmits a heartbeat signal to the display device at intervals in the working state, so that the display device determines to maintain wireless connection with the wireless communication module through the heartbeat signal received at intervals. After step 120, it further includes: stopping supplying the power to the processing module when the power supply duration of the battery module reaches the first duration, so that the processing module stops transmitting the heartbeat signal to the display device, and determining to terminate the wireless connection with the wireless communication module and deleting the currently stored screen transmission data when the display device does not receive the heartbeat signal within the preset second duration.

In an exemplary bidirectional heartbeat mechanism, the wireless screen transmitter transmits heartbeat packets to the display device at intervals, and the display device further transmits heartbeat packets to the wireless screen transmitter at intervals. Afterwards, the wireless screen transmitter and the display device may determine their wireless connection based on the heartbeat packets received at intervals. In an embodiment, the heartbeat packet transmitted by the wireless screen transmitter to the display device is referred to as a heartbeat signal, and the heartbeat signal is the same object as the heartbeat packet generated by the wireless screen transmitter in the prior art, which will not be repeated at present.

The processing module generates heartbeat signals at intervals in the working state, and transmits the heartbeat signals to the display device through the wireless communication module. When the battery module stops providing power to the processing module, the processing module enters a non-working state and no longer generates heartbeat signals. Therefore, the display device cannot receive heartbeat signals. Based on this, the display device may determine whether to maintain a wireless connection with the wireless screen transmitter based on the reception status of the heartbeat signal. The reception status of heartbeat signals may reflect the reception status of heartbeat signals, that is, whether heartbeat signals are received intermittently. For example, when the display device receives a heartbeat signal at intervals, it is determined to maintain a wireless connection with the wireless screen transmitter. If the display device does not receive a heartbeat signal, it is further determined whether the duration of the missed heartbeat signal has reached the preset second duration. The second duration may be set according to the actual situation. When no heartbeat signal is received for the second duration, it indicates that the wireless screen transmitter has terminated its wireless connection with the display device, and therefore, the wireless connection with the wireless screen transmitter is disconnected. When the heartbeat signal is received again within the second duration, it indicates that the wireless screen transmitter is still wirelessly connected to the display device, therefore, the wireless connection with the wireless screen transmitter is maintained.

In other words, regardless of whether the processing module transmits a connection stop command to the display device, as long as the processing module is in the working state, it will use a bidirectional heartbeat mechanism with the display device through the wireless communication module. When the display device receives the heartbeat signal from the wireless screen transmitter, it may be considered that the wireless screen transmitter is online, that is, it maintains a wireless connection with the wireless screen transmitter. When the power module stops supplying power to the processing module, the processing module is in the non-working state and no longer transmits heartbeat signals to the display device. When the display device does not receive a heartbeat signal within the second duration, it is determined that the wireless screen transmitter is not online (i.e. not working), therefore, it is determined that the wireless connection with the wireless screen transmitter is disconnected. When the processing module is in the working state again (i.e. the power module supplies power to the processing module again), the processing module may establish a wireless connection with the display device and perform a bidirectional heartbeat mechanism with the display device.

At this point, for the wireless screen transmitter, the connection between it and the display device is not related to the connection between the wireless screen transmitter and the terminal device, but to the working state of the processing module in the wireless screen transmitter. Whether the processing module is in working state is related to whether the power supply module is supplying power to the processing module.

For example, when the display device disconnects from the wireless screen transmitter, it deletes its own stored screen transmission data.

It may be understood that the wireless connection between the wireless screen transmitter and the display device is specifically achieved by the wireless communication module and the display device being wirelessly connected.

It should be noted that the implementation manner when the power module stops providing power to the processing module is currently not limited. For example, a switch is installed in the circuit connecting the power module and the processing module, and the power module controls the switch to stop providing power to the processing module and restore power to the processing module. For example, the interface connecting the power module control and processing module is no longer outputting power signals to stop providing power to the processing module.

Optionally, if the wireless screen transmitter is wired again to the terminal device (which may be another terminal device) within the first duration after the connection is disconnected, the power module will continue to provide power to each module in the working state of the wireless screen transmitter.

In an embodiment, the reason why the power module continues to provide power to the wireless communication module is to determine whether to restore power supply to the processing module based on the detection of the first sensor of the wireless communication module. At this point, after the power module stops providing power to the processing module, the method further includes: notifying, by the wireless communication module, the power module when the wireless communication module detects the movement of the wireless screen transmitter through the first sensor; the power module provides power to the processing module based on notifications from the wireless communication module, so as to restore the processing module to its working state.

For example, the power module continuously provides power to the wireless communication module, so that the program driving the first sensor in the wireless communication module runs continuously and obtains the detection result of the first sensor. During the continuous detection process of the first sensor, the program notifies the power module when the wireless screen transmitter moves based on the detection result of the first sensor. Because the wireless screen transmitter may move during the wired connection with the terminal device, the power module determines that the wireless screen transmitter may need to be wired connected to the terminal device based on the notification, transmitted by the wireless communication module, of the wireless screen transmitter moving. At this point, if the power module is not currently providing power to the processing module, it will restore the power provided to the processing module (and also provide power to other modules) to enable the processing module to enter a working state, thereby establishing a wireless connection between the wireless communication module and the display device. If the power module has already provided power to the processing module, no further processing will be performed. In this way, when the user moves the wireless screen transmitter, the wireless screen transmitter may enter the working state, which may ensure that the wireless screen transmitter works quickly after connecting with the terminal device, and improve the connection efficiency. Moreover, since the power module does not need to continuously provide power to the processing module, the volume of the battery module in the power module can be reduced, thereby reducing the volume of the wireless screen transmitter.

It may be understood that due to the built-in power supply of the wireless screen transmitter, when the wireless screen transmitter is disconnected from the terminal device and the power module continues to supply power, the wireless screen transmitter may still work. The processing module executes step 130.

Step 130: generating a connection stop command and transmitting the connection stop command to the display device through the wireless communication module, so that the display device stops displaying the screen data based on the connection stop command when the processing module determines that the interface module is disconnected with the terminal device.

In an embodiment, when the processing module detects a disconnection between the wireless screen transmitter and the terminal device, it generates a connection stop command. The connection stop command is used to notify the display device to stop displaying screen transmission data, for example, when the screen transmission data is a PPT image, the PPT image is stopped to be displayed. A generation rule for the connection stop command is currently not limited. Optionally, the connection stop command is generated by the application installed inside the processing module. The application that generates the connection stop command and the application that determines to stop transmitting screen data between the wireless screen transmitter and the terminal device (i.e., the connection between the wireless screen transmitter and the terminal device is disconnected) may be the same application or different applications. When belonging to different applications, the application that generates the connection stop command generates the connection stop command based on the disconnection determination result of another application. After the processing module generates a connection stop command, the processing module transmits the connection stop command to the wireless communication module.

Afterwards, the wireless communication module transmits a connection stop command to the display device. After receiving the connection stop command, the display device stops displaying screen data. After stopping the display of screen data, the display content of the display device is currently not limited. For example, after the display device stops displaying screen data, it displays its own operating system desktop. For example, after the display device stops displaying screen data, it displays a pre-set image. For example, after the display device stops displaying screen transmission data, it restores displaying the content displayed before receiving the screen transmission data.

In an embodiment, the display device is installed with an application for receiving a connection stop command. After receiving the connection stop command, the application transmits a command to stop displaying the screen transmission data to the application for displaying the screen transmission data in the display device. The application for displaying the screen transmission data stops displaying the screen transmission data based on the command to stop displaying the screen transmission data.

For display devices, the on/off of their wireless connection with the wireless screen transmitter is not related to whether the display device receives a connection stop command, but rather to whether the display device receives the heartbeat signal from the wireless screen transmitter. Based on this setting, it is possible to maintain a wireless connection between the wireless screen transmitter and the display device while alternately using the wireless screen transmitter between different terminal devices, thereby improving screen transmission efficiency. Moreover, when the display device receives the connection stop command, it stops displaying screen transmission data, while still maintaining a wireless connection with the wireless screen transmitter. When the display device determines to disconnect from the wireless screen transmitter, it deletes the stored screen transmission data to ensure accurate disconnection of the wireless connection between the display device and the wireless screen transmitter.

For example, currently, the wireless screen transmitter is connected with the first terminal device and is in the working state. When the user unplugges the wireless screen transmitter from the first terminal device, the power module of the wireless screen transmitter starts timing and provides continuously power to the processing module and the wireless communication module for the first duration. During the power supply, the processing module remains in the working state and continues to transmit heartbeat signals to the display device. And, the processing module generates a connection stop command and transmits it to the display device through the wireless communication module. The display device stops displaying screen transmission data based on the connection stop command, and maintains a wireless connection with the wireless screen transmitter based on the received heartbeat signal.

When the user inserts the wireless screen transmitter into a second terminal device (within the first duration), the wireless screen transmitter determines to reconnect with the terminal device. At this point, the power module stops timing and continuously provides power to the processing module and the wireless communication module. At this point, the processing module may transmit the screen transmission data transmitted by the second terminal device to the display device for display through the wireless communication module. During this process, as the processing module is always in the working state, the display device may continuously receive the heartbeat signal transmitted by the wireless screen transmitter, and thus maintain a wireless connection with the wireless screen transmitter to quickly receive and display the screen transmission data of the second terminal device.

It may be understood that the wireless screen transmitter was unplugged from the first terminal device and not plugged into the second terminal device. At this point, when the timing of the power module reaches the first duration, it stops supplying power to the processing module. The processing module finishes its working state and no longer transmits heartbeat signals. When the display device does not receive a heartbeat signal for the second duration, it is determined that the wireless connection to the wireless screen transmitter is disconnected, and the current screen transmission data is deleted. In this way, when the wireless screen transmitter is in the non-working state, it may automatically disconnect the wireless connection between the wireless screen transmitter and the display device.

As mentioned above, the power module of the wireless screen transmitter provides power to the processing module and the wireless communication module of the wireless screen transmitter. During wireless screen transmission, the processing module of the wireless screen transmitter is in the working state and receives screen transmission data transmitted by the terminal device through the interface module. Then, the screen transmission data is transmitted to the display device through the wireless communication module for display. When the interface module is disconnected with the terminal device, the power module continuously provides power to the processing module and the wireless communication module for a first duration to maintain the working state of the processing module. When the power supply stop condition is met, the power supplying to the processing module is stopped to finish the working state of the processing module. The processing module maintains the wireless connection between the wireless communication module and the display device in the working state. And during the continuous power supply process of the power module, the processing module generates a connection stop command and transmits it to the display device through the wireless communication module, so that the display device stops displaying the screen data transmitted by the wireless screen transmitter based on the connection stop command. Through the above technical solution, such a technical problem has been solved that the display device displays the screen content of the terminal device for a long time when the connection between the wireless screen transmitter and the terminal device is disconnected under wireless screen transmission in related technologies. By setting up a power module in the wireless screen transmitter, the wireless screen transmitter no longer relies on the power provided by the terminal device, thereby ensuring that the wireless screen transmitter continues to work when the connection between the wireless screen transmitter and the terminal device is disconnected, and maintaining the wireless connection between the wireless screen transmitter and the display device. On this basis, when the wireless screen transmitter detects a disconnection from the terminal device, it may quickly generate a connection stop command and transmit it to the display device to stop displaying the screen data, greatly reducing the duration for the display device to continue displaying the screen data. Moreover, the power module only provides power to the processing module for the first duration, which can also reduce the power consumption of the power module. When the processing module no longer receives power from the power module, it stops transmitting heartbeat signals to the display device, allowing the display device to determine the disconnection of the wireless connection with the wireless screen transmitter, and making the maintenance and disconnection of the wireless connection more reasonable.

In an embodiment of the present disclosure, the interface module is a Type-A interface module and/or a Type-C interface module.

For example, a USB port is used as the interface module to undertake the connection work with the terminal device. Currently, the interface module is specifically the plug of the USB port. In an embodiment, the interface module is a Type-A interface module and/or a Type-C interface module. The Type-A interface module adopts the Type-A interface. Type-A interface, also known as USB-Type-A, hereinafter referred to as Type-A interface, the Type-A interface is a hardware interface specification for universal serial bus that supports USB1.0, USB 2.0, USB3.1 Genl (SuperSpeed USB 5Gbps), and USB 3.1Gen2 (SuperSpeed USB 10Gbps). The Type-C interface module adopts the Type-C interface. Type-C interface, also known as USB-Type-C, hereinafter referred to as Type-C interface, the Type-C interface is another hardware interface specification for universal serial bus. Compared with Type-A interface, Type-C interface has faster transmission speed (up to 10Gbps) and more powerful power transmission (up to 100W), and is compatible with USB2.0, USB3.0, and DP (Display Port). When the interface module is a Type-A interface module and a Type-C interface module, it indicates that the wireless screen transmitter has two types of plugs to adapt to display devices with different ports. In an embodiment, taking the interface module as an example of a Type-A interface module or a Type-C interface module, the wireless screen transmitter has one type of plug.

It should be noted that in practical applications, if the interface type of the interface module does not match the interface type of the terminal device, the connection may be achieved through a conversion device. For example, if the interface module is a Type-C interface module and the terminal device is equipped with a Type-A interface module, the interface types of the two do not match. In this case, the connection between the wireless screen transmitter and the display device may be achieved through the interface conversion device of Type-C and Type-A.

In an embodiment, when the interface module is a Type-A interface module, the terminal device is the application subject of the wireless screen transmission protocol. At this time, the terminal device collects screen content and encodes it to acquire screen transmission data that complies with the wireless screen transmission protocol. Afterwards, the terminal device transmits the screen transmission data to the wireless screen transmitter, the wireless screen transmitter transmits the screen transmission data transparently to the display device. At this point, there is no need to set up data processing logic for screen transmission data in the processing module of the wireless screen transmitter. For example, FIG. 7 is a schematic diagram of a wireless screen transmission network architecture according to an embodiment of the present disclosure. Referring to FIG. 7, the wireless screen transmitter is referred to as WP01, the terminal device is referred to as PC, the terminal device is used as a transmitting end of screen transmission data (that is, sender), and the display device is used as the receiving end of screen transmission data (that is, receiver). The wireless screen transmitter and the terminal device is wired connected through USB0 (i.e. interface module), and USB0 adopts Type-A interface. At this time, the wireless screen transmitter relies on the network card architecture and uses Network Address Translation (NAT) to forward the screen transmission data. The wireless screen transmitter and the display device may be wirelessly connected through wlan0, and wlan0 may be understood as a wireless transmission module. The screen transmission data is transmitted from the terminal device to the wireless screen transmitter through USB0. Afterwards, the wireless screen transmitter forwards the screen transmission data to wlan0 through a NAT rule, and then transmits the screen transmission data to the display device through wlan0.

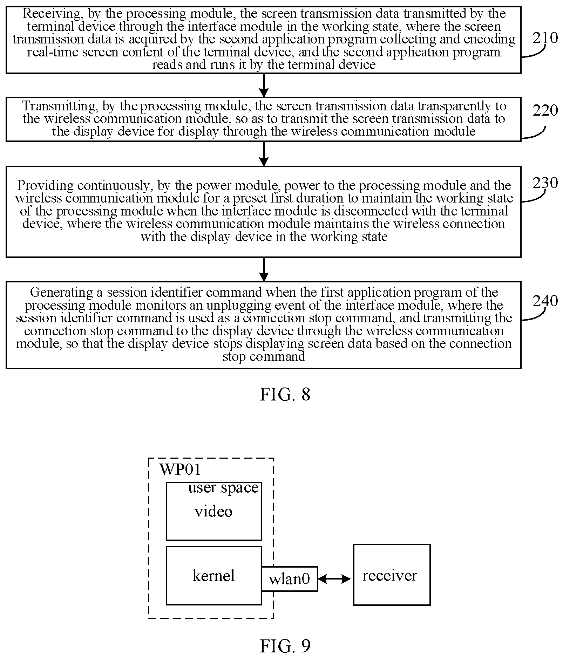

Based on this, FIG. 8 is a flowchart of a connection control method according to an embodiment of the present disclosure. The connection control method shown in FIG. 8 is an exemplary description performed under the Type-A interface module. Specifically, the interface module is a Type-A interface module, and the processing module is installed with a first application and a second application. Referring to FIG. 8, the connection control method further includes steps 210-240:

Step 210: receiving, by the processing module, the screen transmission data transmitted by the terminal device through the interface module in the working state, where the screen transmission data is acquired by the second application collecting and encoding real-time screen content of the terminal device, and the second application is read and run by the terminal device.

As an example, the second application is an application for generating screen transmission data under the Type-A interface module. The second application is stored in the processing module and may be received and run by the terminal device. During the operation of the second application, the screen transmission data may be acquired based on the wireless screen transmission protocol. In an embodiment, the second application is a desktop application (also referred to as GUI program). After the user opens the desktop application, the interface of the program will allow the user to find the required functions in the shortest possible time, and can actively lead the user to complete the work and get the best experience. After the wireless screen transmitter is inserted into the terminal device through the Type-A interface, the second application of the wireless screen transmitter may be read and run by the terminal device. At this time, a main application of the wireless screen transmission protocol is applied to the terminal device. In this case, the wireless screen transmitter may be similar to a USB flash drive, storing a second application for the terminal device to run.

Optionally, when the wireless screen transmitter is wired to the terminal device for the first time, the terminal device reads the second application in the wireless screen transmitter and installs the second application. Subsequently, when the wireless screen transmitter is wired to the terminal device again, the terminal device may run the second application without installing it.

When the wireless screen transmitter is wired to the terminal device for the first time, the wireless screen transmitter transmits a response message to the terminal device. After receiving the response message transmitted by the wireless screen transmitter, the terminal device may display a drive letter of the corresponding external storage device based on its device type description (which may be included in the response message). After the user opens the drive letter corresponding to the wireless screen transmitter in the terminal device, the terminal device may display the storage contents in the storage disk of the wireless screen transmitter, such as displaying the icon of the application stored in the wireless screen transmitter (such as the icon of the second application). The storage disk contains the storage portion of the processing module that may be read by the terminal device. When a second application needs to be installed on a terminal device, the user may double-click or right-click on the icon of the second application by operating the terminal device. Then, the wireless screen transmitter loads the stored second application into the memory of the terminal device through the interface module based on the user operation, for the processor of the terminal device to execute, thereby completing the installation of the second application. Alternatively, when the wireless screen transmitter is wired to the terminal device for the first time, the wireless screen transmitter transmits a pop-up command to the terminal device to pop up a prompt, and the prompt is used to prompt to the user of the terminal device whether to install the second application. Afterwards, when the user chooses to install the second application, the wireless screen transmitter loads the stored second application into the memory of the terminal device through the interface module, or the prompt is used to prompt the user of the terminal device to open the corresponding drive letter. After that, the user may open the drive letter based on the remainder and follow the installation process described above to install the second application.

It should be noted that, except for the first wired connection between the wireless screen transmitter and the terminal device, other scenarios that require the installation of a second application (such as the scenario where the terminal device uninstalls and reinstalls the second application) may also refer to the installation process described above.

Optionally, the second application integrates a screen transmission service program for automatically running the second application. When the second application is installed on the terminal device, the screen transmission service program will run permanently in the background of the terminal device. When the wireless screen transmitter is inserted into the terminal device again, the terminal device will automatically start the second application, and this process does not require manual operation by the user. And optionally, the wireless screen transmitter is equipped with physical buttons, and the processing module may detect the clicking situation of the physical buttons. After the wireless screen transmitter is inserted into the terminal device again, the user presses the physical buttons, and the processing module detects that the physical buttons have been clicked, determines to enter the working state, and notifies the terminal device to run the second application.

During the operation of the second application, the current content displayed on the terminal device screen (i.e. real-time screen content) is obtained, and the screen content is encoded based on the wireless screen transmission protocol to acquire screen transmission data. Optionally, when the second application obtains screen content, it may capture the screen content through screen recording or continuous screenshot, or other methods, which is not limited to in the embodiment. The data acquired by the second application when obtaining screen content may be considered as audio and video data (or media data), and then the second application encodes the audio and video data to acquire screen transmission data. After obtaining the screen transmission data, the second application transmits the screen transmission data to the wireless screen transmitter through the interface module, so that the wireless screen transmitter receives the screen transmission data. The interface module is connected with the processing module, and the screen transmission data received by the interface module may be directly obtained by the processing module.

It may be understood that screen transmission data has real-time characteristics, which may reflect real-time screen content. During the wireless screen transmission process, the screen transmission data is generated in real time and transmitted to the display device by the wireless screen transmitter.

Step 220: transmitting, by the processing module, the screen transmission data transparently to the wireless communication module, so as to transmit the screen transmission data to the display device for display through the wireless communication module.

As an example, the processing module obtains the screen transmission data and transmits the screen transmission data transparently to the wireless communication module, and then transmits it to the display device through the wireless communication module.

In an embodiment, the processing module does not perform any data processing on the transmitted screen data, and only performs data transparency based on the NAT rule. At this point, this step may be exemplified as: transmitting, by the processing module, transparently the screen transmission data received within the set port range of the interface module to the wireless communication module based on a preset NAT rule.

For example, the processing module uses ***iptables*** to set the NAT rule, where the ***iptables*** component is a tool, also known as user space. ***Iptables*** are used to set, maintain, and check the IP packet filtering rules of the Linux kernel. Currently, referring to FIG. 7, when applying ***iptables*** to the wireless screen transmitter, ***user space*** in WP01 is the ***iptables*** component, which is used to set the IP packet filtering rules of the ***kernel,*** i.e., set the NAT rule to achieve transparent transmission of screen data. In an embodiment, after setting the NAT rule, the screen transmission data within the set port range input by the interface module may be forwarded to the wireless communication module based on the NAT rule. The port refers to the port in the TCP/IP protocol, and the specific value of the port range may be set according to actual needs. For example, taking the architecture shown in FIG. 7 as an example, using ***iptables*** to set the Nat rule is as follows:

```
#usb0 in
   iptables -t nat -A PREROUTING -p tcp --dport 7382:7434 -i usb0 -j DNAT --to-destination
   ${target ip}
   iptables -t nat -A PREROUTING -p udp --dport 7382:7434 -i usb0 -j DNAT --to-destination
   ${target ip}
   iptables -t nat -A POSTROUTING -p tcp --dport 7382:7434 -o wlan0 -j MASQUERADE
   iptables -t nat -A POSTROUTING -p udp --dport 7382:7434 -o wlan0 -j MASQUERADE
   #wlan0 in
   iptables -t nat -A PREROUTING -p udp --dport 7382:7434 -i wlan0 -j DNAT --to-destination
   ${pc_usb0_ip}
   iptables -t nat -A POSTROUTING -p udp --dport 7382:7434 -o usb0 -j MASQUERADE
```

Based on the above NAT rule, the set port range for interface module input may be clearly defined. After setting the port range, the processing module may transparently transmit the screen transmission data received within the set port range to the wireless communication module.

For example, the wireless communication module receives the screen transmission data transmitted by the processing module and transmits it to the display device. After receiving the screen transmission data, the display device displays the screen transmission data to enable the display device to display the screen content of the terminal device. Optionally, the display device is equipped with a screen transmission application (also known as a screen transmission application, projection application, screen mirroring application, etc.). After establishing a wireless connection between the display device and the wireless screen transmitter, the screen transmission application is run, or the display device runs the screen transmission application regardless of whether a wireless connection is established between the display device and the wireless screen transmitter. During the operation of the screen transmission application, it receives screen transmission data and acquires the screen content of the terminal device through the screen transmission data. Afterwards, the screen transmission application displays the screen content on the display device. At this time, the screen transmission application is the front-end running application, which means that the user may view the running interface of the screen transmission application (the interface displays the screen content).

In an embodiment, the screen transmission data is transmitted to the display device through a ***socket*** connection, that is, after the wireless screen transmitter and the display device establish a connection based on ***TCP,*** real-time screen transmission data is transmitted through the ***socket*** connection. Understandably, ***socket*** may maintain a long connection between wireless screen transmitters and display devices, which is more conducive to the rapid transmission of screen data.

Step 230: providing continuously, by the power module, power to the processing module and the wireless communication module for a preset first duration to maintain the working state of the processing module when the interface module is disconnected with the terminal device, where the wireless communication module maintains a wireless connection with the display device in the working state.

Step 240: generating a session identifier command when the first application of the processing module monitors an unplugging event of the interface module, where the session identifier command is used as a connection stop command, and transmitting the connection stop command to the display device through the wireless communication module, so that the display device stops displaying screen data based on the connection stop command.

In an embodiment, when the wireless screen transmitter only transparently transmits screen transmission data, the wireless screen transmitter is separately installed with an application for monitoring the connection between the wireless screen transmitter and the terminal device. Currently, the application for monitoring the connection between the wireless screen transmitter and the terminal device is referred to as the first application. At this point, the interface module is a Type-A interface module, and the processing module is installed with the first application. When the first application monitors the unplugging event of the interface module, it generates a connection stop command.

For example, in the working state of the processing module, the first application is continuously running, and the first application continuously monitors whether the unplugging event of the interface module is detected. The unplugging event refers to the event where the wireless screen transmitter is unplugged from the terminal device. For example, when the first application detects a change in the USB port pin level that corresponds to the change when the wireless screen transmitter is disconnected from the terminal device, it is determined that an unplugging event has been monitored. For example, when the first application detects that screen transmission data cannot be obtained from the terminal device, it is determined that an unplugging event has been monitored.

After the first application monitors the unplugging event, it generates a connection stop command. In an embodiment, the connection stop command generated by the first application is a session identifier command, and the session identifier command may also be referred to as a ***session-id*** command, and ***session*** refers to the session and ***session-id*** refers to ID (identifier) of the session, and each ***session*** having a corresponding ID. The ***session-id*** command contains ***session-id.*** After wireless connection between the wireless screen transmitter and the display device, a ***session*** is established. At this time, both the wireless screen transmitter and the display device store the corresponding ***session-id.*** When the first application monitors the unplugging event, it generates a session identifier command and transmits it to the display device through the wireless communication module. After receiving the session identifier command, the display device determines that it has received the connection stop command and stops displaying the screen data.

For example, an application corresponding to the first application is installed in the display device, currently referred to as the fourth application. After the display device establishes a wireless connection with the wireless screen transmitter, the display device runs the fourth application, and the fourth application is responsible for listening to the session identifier command. When the fourth application listens to the session identifier command, it determines to stop displaying the screen transmission data. Afterwards, the fourth application instructs the display device to finish displaying the screen transmission data. Optionally, the fourth application generates a command to stop displaying the screen transmission data and transmits it to the screen transmission application of the display device. After receiving the command to stop displaying the screen transmission data, the screen transmission application stops displaying the screen transmission data. Optionally, when the screen transmission data is stopped, the screen transmission application may switch to running in the background, and the display device will display its own operating system desktop. When the screen transmission data is received again, the screen transmission application switches back to running in the foreground. Also optionally, when the screen transmission data is stopped, the screen transmission application keeps running in the foreground and displays a pre-set image (static or dynamic). When the screen transmission data is received again, the screen transmission application stops displaying the image and displays the screen transmission data.

It should be noted that after listening to the unplugging event, the first application may also notify the power module to enable the power module to determine that the interface module is disconnected with the terminal device. That is, when the first application of the processing module monitors an unplugging event of the interface module, the first application of the processing module notifies the power module that the interface module is disconnected with the terminal device, so that the power module may continuously provide power for the first duration. In addition, the processing module further generates a connection stop command.

Based on the above content, it may be seen that under the Type-A interface module, both the wireless screen transmitter and the display device are installed with specific applications (i.e. the first application and the fourth application), and the display device quickly stops displaying screen transmission data when the connection between the wireless screen transmitter and the terminal device is disconnected. Generally, when using the session identifier command as a connection stop command, it may cause the display device to stop displaying screen data within 1s (second) of disconnecting the wireless screen transmitter from the terminal device. Moreover, the wireless screen transmitter only needs to perform transparent transmission of screen transmission data, reducing the data processing load of the wireless screen transmitter.

In an embodiment, when the interface module is a Type-C interface module, due to the compatibility of the Type-C interface with DP, the audio and video data acquired based on the real-time screen content of the terminal device may be directly transmitted to the wireless screen transmitter, and then encoded into screen transmission data by the wireless screen transmitter. That is, when the interface module is a Type-C interface module, the wireless screen transmitter is the application subject of the wireless screen transmission protocol, and the processing module of the wireless screen transmitter is equipped with data processing logic for screen transmission data. In this case, FIG. 9 is a schematic diagram of a wireless screen transmission network architecture according to an embodiment of the present disclosure. Referring to FIG. 9, the wireless screen transmitter is referred to as WP01. The wireless screen transmitter is used as the transmitting end of the screen transmission data, while the display device is used as the receiving end (receiver) of screen transmission data. The wireless screen transmitter is wired to the terminal device through a Type-C interface. The wireless screen transmitter is installed with an application for processing audio and video data, currently referred to as the third application, and the third application applies the wireless screen transmission protocol. In FIG. 9, the third application is referred to as ***video.*** The screen transmission data obtained from ***video*** encoding is transmitted by the ***kernel*** to the display device through ***wlan0*,** where ***wlan0*** may be understood as a wireless communication module.

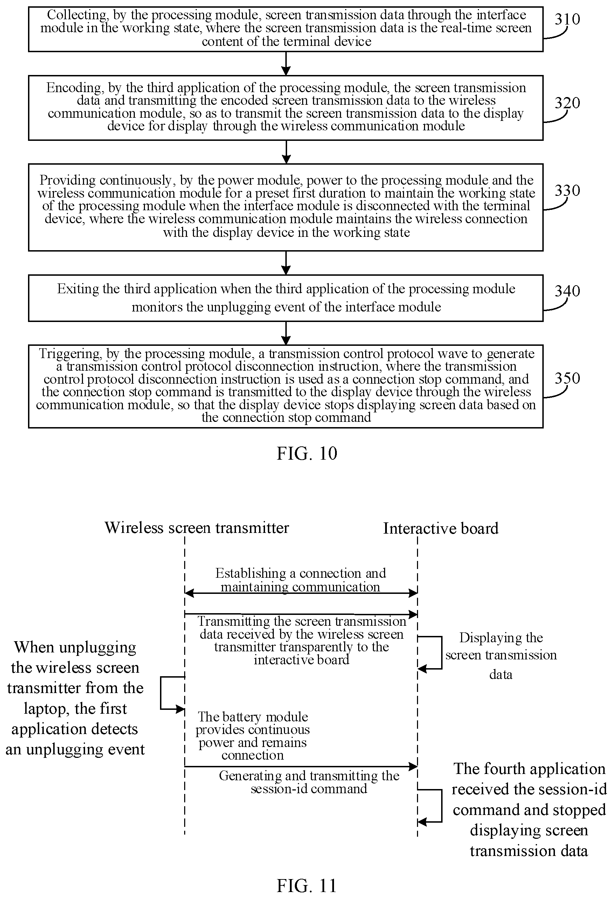

Based on this, FIG. 10 is a flowchart of a connection control method according to an embodiment of the present disclosure. The connection control method shown in FIG. 10 is an exemplary description performed under the Type-C interface module. For example, if the interface module is a Type-C interface module and the processing module is installed with a third application, referring to FIG. 10, the connection control method further includes steps 310-350:

Step 310: collecting, by the processing module, screen transmission data through the interface module in the working state, where the screen transmission data is the real-time screen content of the terminal device.

For example, after the wireless screen transmitter is inserted into the terminal device through the Type-C interface, the wireless screen transmitter runs a third application, which obtains real-time screen content from the terminal device. Understandably, at this point, the terminal device does not need to install a third application.

Optionally, after inserting the wireless screen transmitter into the terminal device, the processing module is in working mode and runs the third application. And optionally, the wireless screen transmitter is equipped with physical buttons, and the processing module may detect a clicking status of the physical buttons. After the wireless screen transmitter is inserted into the terminal device, the processing module is in a working state. Afterwards, the processing module detects that the physical buttons have been clicked and runs the third application.

Optionally, before running the third application, the wireless screen transmitter may pop up a prompt in the terminal device, and the prompt is used to prompt the user of the terminal device whether to run the third application. Afterwards, when the user chooses to run the third application, the wireless screen transmitter will run it.

Optionally, during the operation of the third application, real-time screen content of the terminal device is collected through the Type-C interface. And optionally, the terminal device may collect screen content and transmit it to the wireless screen transmitter, and the third application of the wireless screen transmitter may receive the screen content to achieve the collection of screen content. When collecting screen content, screen recording or continuous screenshots may be used to acquire screen content, or other manners may be used to acquire screen content, which is not limited to in the embodiments. Understandably, the currently collected screen content is multimedia data and has not yet been encoded based on wireless screen transmission protocol. The screen transmission data received by the processing module is screen content that has not been encoded based on the wireless screen transmission protocol.

Step 320: encoding, by the third application of the processing module, the screen transmission data and transmitting the encoded screen transmission data to the wireless communication module, so as to transmit the screen transmission data to the display device for display through the wireless communication module.

After obtaining the screen content, the third application of the processing module encodes the screen content based on the wireless screen transmission protocol to acquire encoded screen transmission data, and transmits the encoded screen transmission data to the wireless communication module. Afterwards, the wireless communication module transmits the encoded screen transmission data to the display device for display. The processing procedure of the wireless communication module may refer to the processing procedure of the wireless communication module in step 220.

It should be noted that under the Type-C interface module, the wireless screen transmitter encodes the screen transmission data and transmits it. Therefore, the socket connection between the wireless screen transmitter and the display device may be understood as controlled by the wireless screen transmitter.

Step 330: providing continuously, by the power module, power to the processing module and the wireless communication module for a preset first duration to maintain the working state of the processing module when the interface module is disconnected with the terminal device, where the wireless communication module maintains a wireless connection with the display device in the working state.

Step 340: exiting the third application when the third application of the processing module monitors the unplugging event of the interface module.

For example, under the Type-C interface module, the third application of the wireless screen transmitter is responsible for encoding the screen transmission data. Therefore, the third application may be used to detect the connection status between the wireless screen transmitter and the terminal device.

During the running process of the third application, it also monitors the unplugging event. For example, when the third application detects that the change in the USB port pin level matches the change when the wireless screen transmitter is disconnected from the terminal device, it is determined that an unplugging event has been monitored. For example, when the third application detects that the screen content cannot be obtained from the terminal device, it is determined that an unplugging event has been monitored. After monitoring the unplugging event, the processing module generates a ***kill*** command to finish (exit) the third application, where the ***kill*** command is used to kill (finish) processes, services, etc. In the embodiment, the ***kill*** command is used to finish the running of the third application. Optionally, the ***kill*** command may be generated by a third application or other applications, and is currently not restricted.

It should be noted that after the third application listens to the unplugging event, the third application may also notify the power module to enable the power module to determine the disconnection between the interface module and the terminal device. When the third application of the processing module monitors the unplugging event of the interface module, the third application of the processing module notifies the power module that the interface module is disconnected with the terminal device, so that the power module may provide continuously power for the first duration, and the processing module also exits the third application.

Step 350: triggering, by the processing module, a transmission control protocol wave to generate a transmission control protocol disconnection instruction, where the transmission control protocol disconnection instruction is used as the connection stop command, and the connection stop command is transmitted to the display device through the wireless communication module, so that the display device stops displaying screen data based on the connection stop command.

In an embodiment, after the third application exits, the processing module determines that it needs to inform the display device to stop displaying the screen transmission data. Optionally, both the wireless screen transmitter and the display device are equipped with applications for implementing the heartbeat mechanism. Currently, the application for implementing the heartbeat mechanism is referred to as the heartbeat application. It may be understood that the heartbeat application in the wireless screen transmitter is installed in the processing module and exchanges heartbeat signals with the display device when the processing module is in the working state. Currently, the heartbeat application of the wireless screen transmitter performs the operation of notifying the display device to stop displaying screen data. For example, when the heartbeat application determines that the third application has exited, it triggers a ***TCP*** wave (i.e., a transmission control protocol disconnect wave). ***TCP*** wave corresponds to ***TCP*** handshake, and ***TCP*** connection between the wireless screen transmitter and the display device is achieved through ***TCP*** handshake. Currently, ***TCP*** wave may be understood as an active ***TCP*** disconnection request initiated by a wireless screen transmitter to a display device. When ***TCP*** waving, the heartbeat application in the wireless screen transmitter generates a ***TCP*** disconnection command (i.e. transmission control protocol disconnection command) and transmits the ***TCP*** disconnection command as a connection stop command to the display device.

After receiving the ***TCP*** disconnect command, the display device stops displaying screen data. Optionally, the heartbeat application of the display device receives a ***TCP*** disconnect command and instructs the display device to actively disconnect from the ***TCP*** connection with the wireless screen transmitter based on the ***TCP*** disconnect command. After disconnecting the ***TCP*** connection, the screen transmission application of the display device stops receiving screen transmission data and stops displaying the screen transmission data. At this point, the display device and the wireless screen transmitter may still exchange heartbeat packets based on the heartbeat application to maintain the wireless connection between the display device and the wireless screen transmitter. It may be understood that the response manner when the screen transmission application stops displaying screen transmission data is the same as the response manner of the screen transmission application in step 240, and will not be repeated at this time.

In some embodiments, the ***TCP*** disconnect command (i.e., transmission control protocol disconnect command) may also be directly generated by a third application. For example, when the third application exits the runtime, it directly generates a ***TCP*** disconnect command (i.e., transmission control protocol disconnect command) and transmits the ***TCP*** disconnect command as a connection stop command to the display device. After receiving the ***TCP*** disconnect command, the display device stops displaying screen data.

It should be noted that the reason why wireless screen transmitters have different processing manners under Type-A and Type-C interfaces is that the Type-C interface module supports DP, which may transmit the original collected audio and video data and encode it in the wireless screen transmitter, while the Type-A interface module does not support DP, which may only be encoded by the display device and transmitted to the wireless screen transmitter.

As mentioned above, when the wireless screen transmitter adopts the Type-C interface module, only the third application for encoding screen transmission data and the heartbeat application for implementing the heartbeat mechanism need to be used to quickly stop the display device from displaying screen transmission data when the wireless screen transmitter and terminal device are disconnected, and there is no need to install additional applications in the wireless screen transmitter and display device.

Of course, under the Type-C interface module, the same manner as the Type-A interface module may also be used to quickly stop displaying screen data on the display device, that is, it may also be installed with a first application, and the first application may be used to cooperate with the fourth application of the display device to achieve the quick stop of displaying screen data on the display device. Reference is made to the relevant description of the Type-A interface module above for specific details, which will not be repeated at present.

It should be noted that the screen transmission application and the heartbeat application installed on the display device may be integrated into the same application or different applications.

It should be noted that the following provides an exemplary description of the connection control method according to the embodiments of the present disclosure. This example takes a conference scenario as an example, and in practical applications, it may also be used in wireless screen transmission scenarios such as teaching scenarios. In the conference scenario, users bring laptops into the conference room, which is equipped with interactive boards. After the user inserts the wireless screen transmitter into the laptop, the screen content of the laptop may be wirelessly transmitted to the interactive board for display based on the wireless screen transmitter.

When the wireless screen transmitter adopts a Type-A interface module, FIG. 11 is a flowchart of the connection control method according to an embodiment of the present disclosure. Referring to FIG. 11, the wireless screen transmitter establishes a ***TCP*** connection with the interactive board and maintains communication (through ***socket*** connection). Afterwards, the wireless screen transmitter receives the screen transmission data encoded by the laptop. After inserting the wireless screen transmitter into the laptop, the laptop runs the second application in the wireless screen transmitter to encode the current screen content of the laptop to acquire the screen transmission data. At the same time, the wireless screen transmitter runs the first application and heartbeat application, while the interactive board runs the screen transmitter, fourth application, and heartbeat application.

After receiving the screen transmission data, the wireless screen transmitter transmits the screen transmission data transparently to the interactive board, which displays the screen transmission data. When there is no need to transmit the screen, the user plugs out the wireless screen transmitter from the laptop. At this time, the power module of the wireless screen transmitter continues to provide power to each module of the wireless screen transmitter to maintain its working state until the first duration of continuous power supply is reached. The power module only provides power to the wireless communication module to finish the working state. When the first application of the wireless screen transmitter detects an unplugging event in the working state, the first application of the wireless screen transmitter generates a ***session-id*** command and transmits it to the interactive board. After receiving the ***session-id*** command, the fourth application of the interactive board stops displaying the screen transmission data. Generally, according to the aforementioned method, the duration from the user unplugging the wireless screen transmitter to the interactive board stopping displaying the screen transmission data is less than 1s, significantly reducing the duration of screen transmission data display and improving conference efficiency. Especially at the end of the conference, users may leave the conference room by unplugging the wireless screen transmitter, without worrying about the leakage of conference content caused by the prolonged display of screen data on the interactive board, effectively protecting conference privacy.

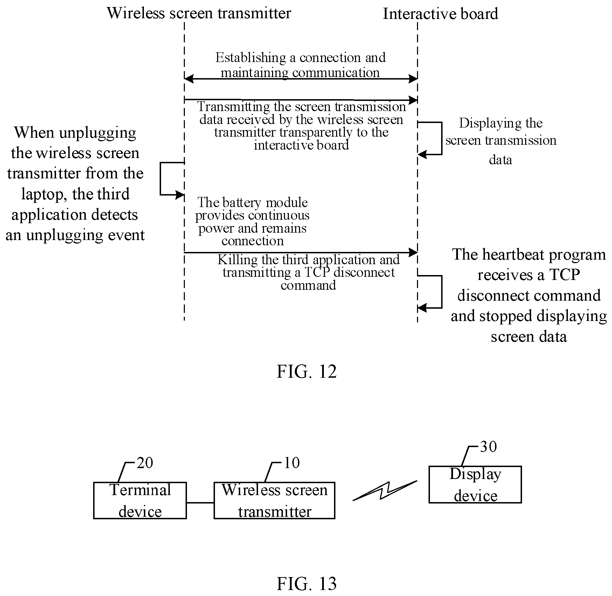

When the wireless screen transmitter adopts a Type-C interface module, FIG. 12 is a flowchart of the connection control method according to an embodiment of the present disclosure. Referring to FIG. 12, the wireless screen transmitter establishes a ***TCP*** connection with the interactive board and maintains communication (through ***socket*** connection). The wireless screen transmitter runs the third application and heartbeat application, while the interactive board runs the screen transmitter and heartbeat application. Afterwards, the third application of the wireless screen transmitter receives the current screen content of the laptop as screen transmission data and encodes it. Afterwards, the wireless screen transmitter transmits the encoded screen transmission data to the interactive board, and the interactive board displays the screen transmission data. After the screen transmission is completed, the user plugs out the wireless screen transmitter from the laptop. At this time, the power module of the wireless screen transmitter continues to provide power to each module of the wireless screen transmitter to maintain its working state until the first duration of continuous power supply is reached. The power module only provides power to the wireless communication module to finish the working state. When the third application of the wireless screen transmitter detects an unplugging event in the working state, the third application of the wireless screen transmitter ***kills*** the third application and triggers a ***TCP*** wave from the heartbeat application. The wireless screen transmitter transmits a ***TCP*** disconnect command based on the ***TCP*** wave to the interactive board. After receiving the ***TCP*** disconnect command, the heartbeat application of the interactive board stops displaying screen data. Generally, according to the aforementioned method, the duration from the user unplugging the wireless screen transmitter to the interactive board stopping displaying the screen transmission data is less than 1s, significantly shortening the duration of the screen transmission finishing process and improving conference efficiency. Especially at the end of the conference, users can leave the conference room by unplugging the wireless screen transmitter, without worrying about the leakage of conference content caused by the prolonged display of screen data on the interactive board, effectively protecting conference privacy.

In an embodiment of the present disclosure, a conference system is further provided. FIG. 13 is a schematic diagram of the structure of a conference system according to an embodiment of the present disclosure. Referring to FIG. 13, the conference system includes a wireless screen transmitter 10, a terminal device 20, and a display device 30. The wireless screen transmitter 10 includes an interface module, a processing module, a wireless communication module, and a power module. The wireless screen transmitter 10 is connected with the terminal device 20 through the interface module and establishes a wireless connection with the display device 30 through the wireless communication module. The power module is configured to provide power for the processing module and the wireless communication module

The terminal device transmits screen transmission data to the interface module, the screen transmission data is generated based on the real-time screen content of the terminal device; the processing module of the wireless screen transmitter receives screen transmission data transmitted by the terminal device through the interface module in the working state, and transmits the screen transmission data to the display device through the wireless communication module; the display device displays screen data; when the interface module is disconnected with the terminal device, the power module of the wireless screen transmitter provides continuously power to the processing module and the wireless communication module for a preset first duration to maintain the working state of the processing module, the wireless communication module maintains a wireless connection with the display device in the working state; when the processing module of the wireless screen transmitter determines that the interface module is disconnected with the terminal device, it generates a connection stop command and transmits it to the display device through the wireless communication module; the display device stops displaying the screen transmission data transmitted by the wireless screen transmitter based on the connection stop command.

In an embodiment of the present disclosure, the interface module of the wireless screen transmitter is a Type-A interface module and/or a Type-C interface module.

In an embodiment of the present disclosure, when the interface module is a Type-A interface module, the processing module is installed with a first application, and the display device is installed with a fourth application; when the processing module of the wireless screen transmitter determines that the interface module is disconnected with the terminal device, it generates a connection stop command specifically, when the first application of the processing module of the wireless screen transmitter monitors the unplugging event of the interface module, it generates a session identifier command, the session identifier command is used as the connection stop command; the display device stops displaying the screen transmission data transmitted by the wireless screen transmitter based on the connection stop command, which specifically is, when the fourth application of the display device receives the session identifier command, it instructs the display device to stop displaying the screen transmission data transmitted by the wireless screen transmitter.

In an embodiment of the present disclosure, when the interface module is a Type-A interface module, the processing module is installed with a second application. The processing module of the wireless screen transmitter receives the screen transmission data transmitted by the terminal device through the interface module in the working state, and transmits the screen transmission data to the display device through the wireless communication module, which may include: the processing module of the wireless screen transmitter receives the screen transmission data transmitted by the terminal device through the interface module in the working state, where the screen transmission data is obtained by the second application collecting and encoding the real-time screen content of the terminal device, and the second application is read and run by the terminal device; the processing module of the wireless screen transmitter transmits the screen transmission data transparently to the wireless communication module, so as to transmit the screen transmission data to the display device for display through the wireless communication module.

In an embodiment of the present disclosure, the processing module of the wireless screen transmitter transmits the screen transmission data transparently to the wireless communication module, which specifically is, the processing module of the wireless screen transmitter transmits the screen transmission data received within a set port range of the interface module transparently to the wireless communication module based on the preset NAT rule.

In an embodiment of the present disclosure, when the interface module is a Type-C interface module, the processing module is installed with a third application, the processing module of the wireless screen transmitter receives screen transmission data transmitted by the terminal device through the interface module in the working state, and transmits the screen transmission data to the display device through the wireless communication module, which may include: the processing module of the wireless screen transmitter collects screen transmission data through the interface module in the working state, and the screen transmission data is real-time screen content of the terminal device; the processing module of the wireless screen transmitter encodes the screen transmission data through a third application and transmits the encoded screen transmission data to the wireless communication module; the wireless communication module of the wireless screen transmitter transmits screen transmission data to the display device.

In an embodiment of the present disclosure, when the interface module is a Type-C interface module, the processing module is installed with a third application, when the processing module of the wireless screen transmitter determines that the interface module is disconnected with the terminal device, it generates a connection stop command, which may include: when the third application of the processing module of the wireless screen transmitter monitors an unplugging event of the interface module, it exits the third application; the processing module of the wireless screen transmitter triggers the transmission control protocol wave to generate a transmission control protocol disconnection instruction, where the transmission control protocol disconnection instruction is used as the connection stop command.

In an embodiment of the present disclosure, the wireless communication module includes a first sensor; after the power module of the wireless screen transmitter stops providing power to the processing module, the wireless communication module of the wireless screen transmitter notifies the power module when detecting that the wireless screen transmitter moves through the first sensor; the power module of the wireless screen transmitter provides power to the processing module based on notifications from the wireless communication module, so as to restore the processing module to its working state.

In an embodiment of the present disclosure, the processing module of the power module of the wireless screen transmitter intermittently transmits heartbeat signals to the display device in the working state, so that the display device determines to maintain wireless connection with the wireless communication module through the heartbeat signals received at intervals. After providing continuously power to the processing module and the wireless communication module for a preset first duration, the power module stops providing power to the processing module when the power supply duration reaches the first duration, so that the processing module stops transmitting heartbeat signals to the display device, and the display device determines to terminate the wireless connection with the wireless communication module and delete the currently stored screen transmission data when it does not receive the heartbeat signal within the preset second duration.

It should be noted that the technical details during the use of the conference system in the implementation example may refer to the relevant descriptions in the connection control method, which has corresponding functions and beneficial effects.

In an embodiment of the present disclosure, a wireless screen transmitter is further provided. Referring to FIG. 5, the wireless screen transmitter 10 includes a processing module 14, a wireless communication module 15, a power module 16, and an interface module 17. The wireless screen transmitter 10 is connected with the terminal device through the interface module 17 and establishes a wireless connection with the display device through the wireless communication module 16.

The interface module 17 is configured to receive screen transmission data transmitted by the terminal device when connecting to the terminal device, and the screen transmission data is generated based on real-time screen content of the terminal device; the processing module 14 is configured to receive screen transmission data transmitted by the terminal device through the interface module in a working state, and transmit the screen transmission data to the wireless communication module, and generate a connection stop command and transmit the connection stop command to the wireless communication module when the processing module 14 determines that the interface module is disconnected with the terminal device; the power module 16 is configured to provide power to the processing module and the wireless communication module, and to continuously provide power to the processing module and wireless communication module for a preset first duration when the connection between the interface module and the terminal device is determined to be disconnected, so as to maintain the working state of the processing module; the wireless communication module 15 is configured to transmit screen transmission data to the display device for display, and further configured to transmit a connection stop command to the display device, so that the display device stops displaying the screen transmission data based on the connection stop command; where the wireless communication module 15 and the display device maintain wireless connection in the working state of the processing module 14.

In an embodiment of the present disclosure, the interface module of the wireless screen transmitter is a Type-A interface module and/or a Type-C interface module.

In an embodiment of the present disclosure, when the interface module is a Type-A interface module, the processing module is installed with a first application. At this time, the processing module 14 is configured to generate a connection stop command when determining the disconnection between the interface module and the terminal device, which is specifically configured to generate a session identifier command as the connection stop command when the first application monitors the unplugging event of interface module 17.

In an embodiment of the present disclosure, when the interface module is a Type-A interface module, the processing module is installed with a second application. Correspondingly, the processing module 14 is configured to receive screen transmission data transmitted by terminal devices through the interface module in the working state, and when transmitting the screen transmission data to the wireless communication module, which may be specifically configured to: receive screen transmission data transmitted by terminal devices through the interface module in the working state, where the screen transmission data is acquired by the second application collecting and encoding the real-time screen content of the terminal device, and the second application is read and run by the terminal device; transmit screen data transparently to the wireless communication module.

In an embodiment of the present disclosure, the processing module 14 is configured to transparently transmit the screen transmission data to the wireless communication module, which is specifically, based on the preset NAT rule, the screen transmission data received within the set port range of the interface module is transparently transmitted to the wireless communication module.

In an embodiment of the present disclosure, when the interface module is a Type-C interface module, the processing module is installed with a third application. The processing module 14 is configured to receive screen transmission data transmitted by the terminal device through the interface module in the working state, and transmit the screen transmission data to the wireless communication module, which is specifically configured to collect screen transmission data through the interface module in the working state, where the screen transmission data is the real-time screen content of the terminal device; run the third application to encode the screen transmission data and transmit the encoded screen transmission data to the wireless communication module.

In an embodiment of the present disclosure, the processing module 14 is configured to generate a connection stop command when determining the interface module is disconnected with the terminal device, which is specifically configured to exit the third application and trigger the transmission control protocol wave to generate a transmission control protocol disconnection instruction when the third application monitors a disconnection event of the interface module, where the transmission control protocol disconnection instruction is used as the connection stop command.

In an embodiment of the present disclosure, the wireless communication module 15 includes a first sensor. The wireless communication module 15 is further configured to notify the power module when the wireless screen transmitter moves detected by the first sensor. The power module 16 is further configured to provide power to the processing module based on the notification from the wireless communication module, so as to restore the processing module to its working state.

In an embodiment of the present disclosure, the processing module 14 is further configured to periodically transmit heartbeat signals to the wireless communication module in the working state; the wireless communication module 15 is further configured to transmit heartbeat signals to display devices; the power module 16 is further configured to continuously provide power to the processing module and the wireless communication module for a preset first duration, and after the power supply duration reaches the first duration, stop providing power to the processing module, so that the processing module stops transmitting heartbeat signals to the display device, and determine to terminate the wireless connection with the wireless communication module and delete the currently stored screen transmission data when the display device does not receive heartbeat signals within the preset second duration.

It should be noted that the technical details during the use of the wireless screen transmitter in the embodiment may be described in relation to the aforementioned connection control method, and it has corresponding functions and beneficial effects.

The embodiment of the present disclosure further provides a storage medium including computer executable instructions, the computer executable instructions are used to perform relevant operations in a data transmission method according to any one of embodiments of the present disclosure when executed by a computer processor, and have corresponding functions and beneficial effects.

Those skilled in the art should understand that embodiments of the present disclosure may be provided as methods, systems, or computer program products.

Therefore, the present disclosure may adopt the form of a complete hardware embodiment, a complete software embodiment, or an embodiment combining software and hardware. Moreover, the present disclosure may adopt the form of a computer program product implemented on one or more computer-usable storage media (which may include but not limited to disk storage, CD-ROM, optical storage, etc.) including computer-usable program codes. The present disclosure is described with reference to flowcharts and/or block diagrams of methods, apparatuses (systems), and computer program products in embodiments of the present disclosure. It should be understood that each process and/or block in the flowchart and/or block diagram, and the combination of processes and/or blocks in the flowchart and/or block diagram can be implemented by computer program instructions. These computer program instructions can be provided to the processor of a general-purpose computer, a special-purpose computer, an embedded processor, or other programmable data processing apparatus to generate a machine, so that with the instructions executed by the processor of the computer or other programmable data processing apparatus, a device that is used to implement the functions specified in one process or multiple processes in the flowchart and/or one block or multiple blocks in the block diagram is generated. These computer program instructions can also be stored in a computer-readable memory that can direct a computer or other programmable data processing apparatus to work in a specific manner, so that the instructions stored in the computer-readable memory produce an article of manufacture including the instruction device, and the instruction device implements the functions specified in one process or multiple processes in the flowchart and/or one block or multiple blocks in the block diagram. These computer program instructions can also be loaded on a computer or other programmable data processing apparatus, so that a series of operation steps are executed on the computer or other programmable equipment to produce computer-implemented processing, thus the instructions executed on the computer or other programmable apparatus provide steps for implementing functions specified in a flow or multiple flows in the flowchart and/or a block or multiple blocks in the block diagram.

In a typical configuration, the computing apparatus includes one or more processors (CPUs), input/output ports, network port, and memory. The memory may include non-permanent memory, random access memory (RAM) and/or non-volatile memory, etc.in a computer-readable medium, such as read-only memory (ROM) or flash memory (flash RAM). The memory is an example of a computer-readable medium.

Computer-readable storage media include permanent and non-permanent, removable and non-removable media, and information storage can be achieved by any method or technology. The information can be computer-readable instructions, data structures, program modules, or other data. Examples of computer-readable storage media include, but are not limited to: phase change memory (PRAM), static random access memory (SRAM), dynamic random access memory (DRAM), other types of random access memory (RAM), read-only memory (ROM), electrically erasable programmable read-only memory (EEPROM), flash memory or other memories, compact disc read-only memory (CD-ROM), digital versatile disc (DVD) or other optical storage, magnetic cassette tape, magnetic disk storage or other magnetic storage apparatuses or any other non-transmission media which can be used to store information capable of being accessed by computing apparatuses. According to the definition in the present disclosure, computer-readable media does not include transitory media, such as modulated data signals and carrier waves.

It should also be noted that the terms "include", "comprise" or any other variants thereof are intended to cover non-exclusive inclusion, so that a process, method, commodity or equipment including a series of elements not only includes those elements, but also includes other elements that are not explicitly listed, or also include elements inherent to such processes, methods, commodities, or equipment. If there are no more restrictions, the element defined by the sentence "including a..." does not exclude the existence of other identical elements in the process, method, commodity, or equipment that includes the element.

It should be noted that the above is only preferred embodiments of the present disclosure and the applied technical principle. Those skilled in the art will understand that the present disclosure is not limited to the specific embodiments described herein, and it is possible for those skilled in the art to make various obvious changes, readjustments and substitutions without departing from the claimed scope of the present disclosure. Therefore, although the present disclosure has been described in more detail through the above embodiments, the present disclosure is not limited to the above embodiments, and may include more equivalent embodiments without departing from the inventive concept. The scope of the present disclosure is determined by the scope of the appended claims.

## Claims

1. A connection control method applied to a wireless screen transmitter, wherein the wireless screen transmitter comprises an interface module, a processing module, a wireless communication module, and a power module, the wireless screen transmitter is connected with a terminal device through the interface module and establishes a wireless connection with a display device through the wireless communication module, the power module is configured to provide power to the processing module and the wireless communication module, the method comprises:
receiving, by the processing module, screen transmission data transmitted by the terminal device through the interface module in a working state, and transmitting the screen transmission data to the display device for display through the wireless communication module, wherein the screen transmission data is generated based on real-time screen content of the terminal device;
providing continuously, by the power module, power to the processing module and the wireless communication module for a preset first duration to maintain the working state of the processing module when the interface module is disconnected with the terminal device, wherein the wireless communication module maintains a wireless connection with the display device in the working state; and
generating a connection stop command and transmitting the connection stop command to the display device through the wireless communication module, so that the display device stops displaying the screen data based on the connection stop command when the processing module determines that the interface module is disconnected with the terminal device.

2. The connection control method of claim 1, wherein the interface module is a Type-A interface module and/or a Type-C interface module.

3. The connection control method of claim 2, wherein when the interface module is the Type-A interface module, the processing module is installed with a first application,
the generating the connection stop command when the processing module determines that the interface module is disconnected with the terminal device comprises:
generating a session identifier command when the first application of the processing module monitors an unplugging event of the interface module, wherein the session identifier command is used as the connection stop command.

4. The connection control method of claim 2, wherein when the interface module is the Type-A interface module, the processing module is installed with a second application,
the receiving, by the processing module, screen transmission data transmitted by the terminal device through the interface module in a working state, and transmitting the screen transmission data to the display device for display through the wireless communication module includes:
receiving, by the processing module, the screen transmission data transmitted by the terminal device through the interface module in the working state, wherein the screen transmission data is obtained by the second application collecting and encoding the real-time screen content of the terminal device, and the second application is read and run by the terminal device; and
transmitting, by the processing module, the screen transmission data transparently to the wireless communication module, so as to transmit the screen transmission data to the display device for display through the wireless communication module.

5. The connection control method of claim 4, wherein the transmitting, by the processing module, the screen transmission data transparently to the wireless communication module comprises:
transmitting, by the processing module, the screen transmission data received within a set port range of the interface module transparently to the wireless communication module based on a preset NAT rule.

6. The connection control method of claim 2, wherein when the interface module is the Type-C interface module, the processing module is installed with a third application,
the receiving, by the processing module, screen transmission data transmitted by the terminal device through the interface module in the working state and transmitting the screen transmission data to the display device for display through the wireless communication module comprises:
collecting, by the processing module, screen transmission data through the interface module in the working state, wherein the screen transmission data is the real-time screen content of the terminal device; and
encoding, by the third application of the processing module, the screen transmission data and transmitting the encoded screen transmission data to the wireless communication module, so as to transmit the screen transmission data to the display device for display through the wireless communication module.

7. The connection control method of claim 6, wherein the generating the connection stop command when the processing module determines that the interface module is disconnected with the terminal device comprises:
exiting the third application when the third application of the processing module monitors the unplugging event of the interface module; and
triggering, by the processing module, a transmission control protocol wave to generate a transmission control protocol disconnection instruction, wherein the transmission control protocol disconnection instruction is used as the connection stop command.

8. The connection control method of claim 1, wherein the method further comprises:
transmitting, by the processing module, a heartbeat signal to the display device at intervals in the working state, so that the display device determines to maintain wireless connection with the wireless communication module through the heartbeat signal received at intervals,
after the providing continuously, by the power module, power to the processing module and the wireless communication module for the preset first duration, the method further comprises:
stopping supplying the power to the processing module when the power supply duration of the battery module reaches the first duration, so that the processing module stops transmitting the heartbeat signal to the display device, and determining to terminate the wireless connection with the wireless communication module and deleting the currently stored screen transmission data when the display device does not receive the heartbeat signal within the preset second duration.
